# EUROPEAN PATENT SPECIFICATION

(11) **EP 2 106 970 B1**
(45) Date of publication and mention of the grant of the patent: **17.03.2010**
(21) Application number: 08103353.2
(22) Date of filing: 03.04.2008
(51) Int. Cl.: B60R 1/12, B60R 1/04, B60Q 3/02

(54) **Plastic glass interior mirror with illumination**
Kunststoffglasinnenspiegel mit Beleuchtung
Miroir intérieur en verre plastique avec éclairage

(43) Date of publication of application: 07.10.2009
(73) Proprietor: SMR Patents S.à.r.l., 1653 Luxembourg (LU)
(72) Inventor: Bruhnke, Ulrich, 71139, Ehningen (DE); Eder, Oliver, 75446, Pinache (DE); Wilfinger, Kurt, 71563, Affalterbach (DE)
(74) Representative: Rausch, Gabriele

(56) References cited:
- DE-A1- 3 049 169
- FR-A- 1 525 709
- US-A1- 2006 050 415
- US-A1- 2007 081 350

## Description

The invention is related to an interior rear view mirror which is designed in plastic material and has smooth edges.

The internal rear view mirror has at least in some transparent areas that allow the installation of illumination elements to shine through.

### State of the Art

Internal rear view mirror are defined e.g. by the regulations of ECE 324 Regulation 46. An internal rear view mirror has a couple of requirements as the field of vision which must be at least a 20 m wide flat horizontal portion of the road., One of the requirements is related to the passenger security and requests that the edges of the internal rear view mirror must be rounded to a radius not less than 2.5 mm.

In result of this requirement the internal rear view mirror known in the art often shows designs with a plastic mirror case defining a front opening. The front opening includes the reflecting glass which is fixed by a retaining bezel. The retaining bezel is form of plastic material to fulfill safety requirement and the minimum radius of the regulations.

The appearance of the internal rear view mirror with the bezel surrounding the reflecting element is not satisfying some design request.

It is known from EP 07440321 B1 especially from Figures 18-21 to design an internal rear view mirror without a retaining bezel. The reflecting element is snapped in the peripheral side walls of the mirror case which forms lips, rounded in the required radius.

The proposed solution is using a glass mirror to be pressed between the molded side wall lips. The known solution includes a means to illuminate the interior of a vehicle, read lamps and ambient light. The internal rear view mirror is prepared to receipt light module device and the lenses so that light shines through the mirror housing.

It is also know in the art by DE 30 49 169 to form a plastic glass for an internal rear view mirror. The plastic glass is snapped into place and is tightly connected to the mirror housing. The plastic glass is coated with a reflecting layer on the inner surface of the mirror. A disadvantage is the connection with the tongue and groove joint that needs a precisely molding to connect the mirror housing part with the mirror without a visible slit.

From US20060050415 an exterior rear view mirror is known including a plastic glass mirror snap fitted to housing by tabs. The plastic glass has no functionality to allow illumination.

US 2007/0081350 shows an internal rear view mirror having an illumination means inside the mirror housing according to the preamble of claim 1.

### Summary of the invention

The inventive internal rear view mirror comprises among other features a mirror housing and a one piece front plastic glass that has at least one side piece. The fully transparent plastic glass is molded in one piece and coated with a reflective layer at least partly.

The internal rear view mirror according the invention allows a very simple mirror design including only tow main parts: the mirror housing and the front plastic glass without additional parts as lenses or bezels. The transparent plastic glass is combining the function of the mirror glass, the function of the lenses built in the mirror housing in prior art and the mirror housing with smoothed edges.

With the internal rear view mirror according the invention a light weighted mirror is created. The high flexibility of molded plastic glass allows a lot of different bezel free designs of the internal rear view mirror. The small weight of the interior mirror allows to ease the mirror base structure or to support further functionalities as GPS receiver, wireless connections, etc without dramatically increase of weight.

### Description of the Drawings

Fig. 1 shows a plane view of a internal rear view mirror
Fig. 2 shows a cross section of the internal rear view mirror
Fig. 3 shows a first embodiment of the invention
Fig. 4 shows a second embodiment of the invention
Fig. 5 shows a schematic illumination
Fig. 6 shows a second schematic illumination
Fig. 7a to b show deforming production process
Fig. 8 shows deforming of a second embodiment
Fig. 9 shows the side piece structure to form a lens

### Detailed Description of Embodiments

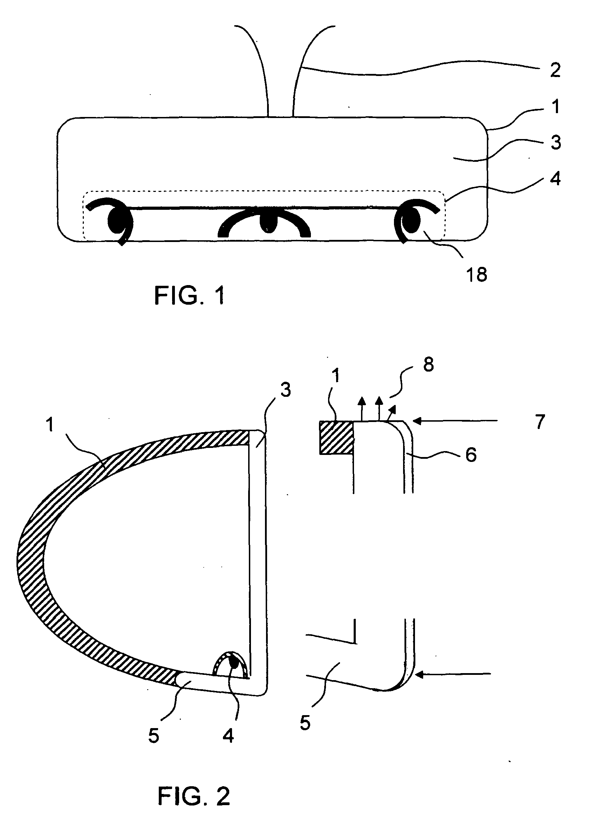

Fig. 1 shows schematically an internal rear view mirror from the front side. A mirror housing 1 is attached to a mirror base 2 which is connected to vehicle's roof or wind screen. The mirror housing 1 has an opening to the interior of the vehicle in which front plastic glass 3 is inserted.

Behind the front plastic glass 3 in the mirror housing a light module 4 is installed either at the backside or the base side of the mirror housing. The light module 4 is known in prior art and comprises a printed circuit board with bulbs and or LEDs and reflectors. In a preferred embodiment only LEDs are installed that works through the lifetime of the inventional mirror and must not be replaced.

Fig. 2 is a cross section of the interior mirror of Fig. 1. The mirror housing 1 and the front plastic glass 3 form a closed cavity in which the electrical and or the electronically elements and circuits are placed. As an example a part of a light module 4 is shown in the cavity. The front plastic glass forms the front plate of the interior mirror and has a side piece 5 forming together an L- form. The edges are smoothed to follow the regulations and design rules. It is possible to have thick front plastic glass with a radius which is much more than the regulations requests. The front plastic glass 3 is one piece closing the front and the base of the internal rear view mirror. The front plastic glass 3 is coated with a reflective layer 6, normally a metal layer. The L-formed front plastic glass has two functions: to be the mirror for the internal rear view mirror and to be the lens for the interior illumination means.

To achieve this function the front plastic glass is formed as a one-piece plastic glass highly transparent and stable. In a further step the plastic glass is coated with metal layer 6 on the front side covering the visible part for passengers looking perpendicular on the surface in direction of arrow 7. This means that the internal rear view mirror appears without a bezel and fully reflecting. But this means also that the section between the non transparent mirror housing 1 and the front plastic glass 3 remains transparent and emits light if light module in the mirror housing is activated. This edge illumination is sketched with arrows 8. Also within the side piece 5 light is emitted through the transparent front plastic glass 3.

The two main parts of the mirror the housing 1 and the front plastic glass3 are connect together in a way person skilled in the art would choose. For example a welding or gluing connection is possible.

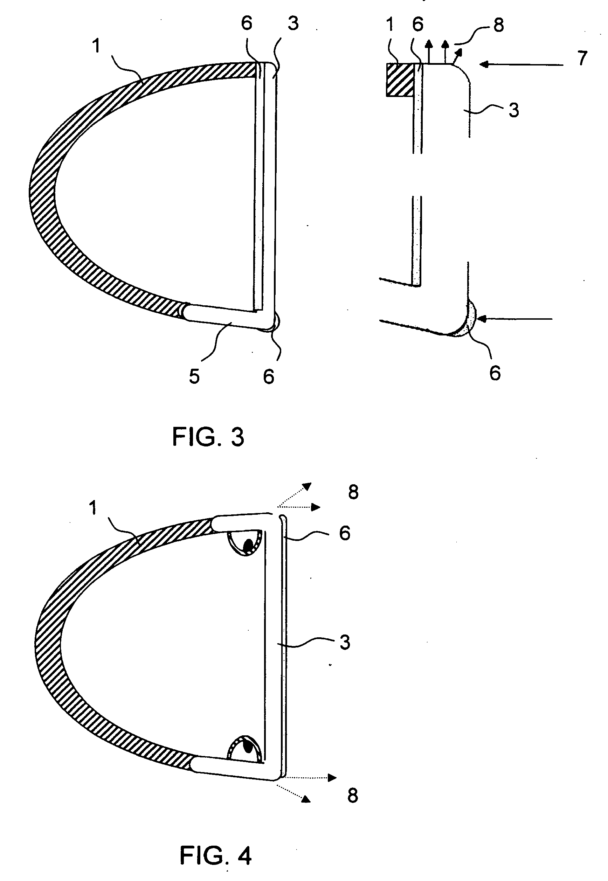

Fig. 3 is a second embodiment of the internal rear view mirror. In this example the references describes the same mirror design as in Fig. 2. The difference is the surface on which the reflective metal layer is coated. In this embodiment the metal layer 6 is on the inner surface of the front plastic glass 3.

As a result the mirror housing 1 would be visible at the lower horizontal part of the mirror from the passengers. In this embodiment this problem is solved with a small area of additional reflective coating 6 on the front side.

In this embodiment the connection between mirror base and mirror housing on the top must achieved in a way not to destroy the metal layer of the reflective coating 6. Alternative also an additional reflective coating area on the outer surface of the front plastic glass is possible covering the edges of the front side. This solution eases the connection between front plastic glass and mirror housing.

The thickness of the reflective coatings depends on the material and the color that should achieved. In Fig 3 edge illumination appears by guiding the light in the reflective element.

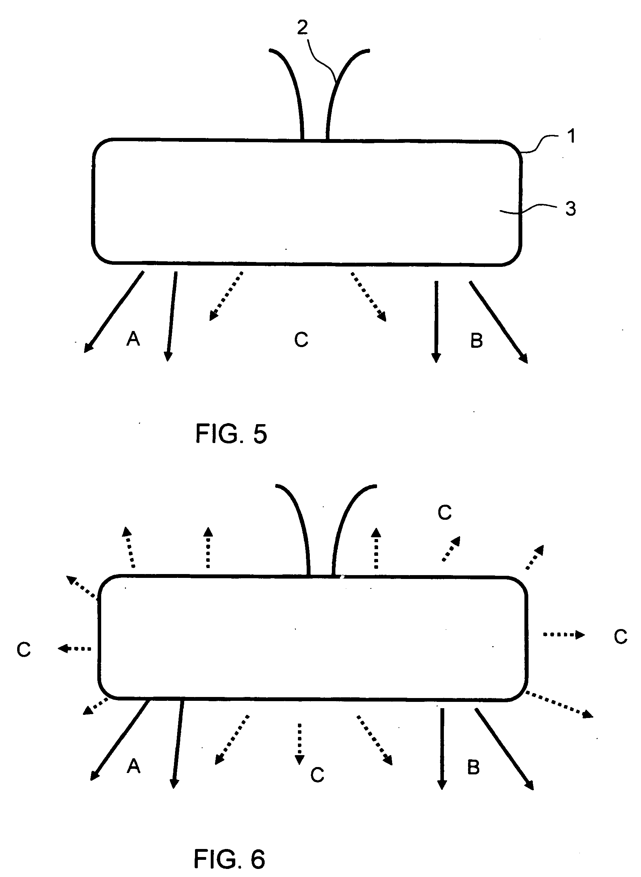

Fig 4 is another embodiment of the invention comprising two side pieces of the front plastic glass covering the bottom and the top of the internal rear view mirror. The front plastic glass is u-shaped. This embodiment is improving the indirect illumination of the internal rear view mirror which could be seen in Fig. 6 with dotted lines.

Figures 5 and 6 shows the appearance of the lighted internal rear view mirror with different areas of illumination A and B mark the read lamp function and C is an ambient light following different designs.

The front plastic glass is a material transparent for visible wavelengths and able to guide visible light to a certain extend. Light is coupled in and coupled out by special surface structures as ribs and edges. The surface structures are positioned beside the optical plan surface of the front plastic glass which is used as a mirror.

The process to mould the plastic glass is published in the EP 1412158.

The process includes the steps of first providing an injection mould machine.The injection molding machine includes a cavity therein, for forming a transparent plastic article simulating the transparency of glass. The mould includes a pressure sensing and regulating apparatus. The mould is thereafter closed and a clear plastic material is injected into the mould through a port. A portion of the mould is used to pressurize the mould material back into the injection port. After the material is partially injected back into the injection port, the mould is held at a predetermined pressure for optimizing optical properties of the plastic material, to provide a clear transparent plastic material which has optical properties similar to glass.

In the device there is provided a first mould platen and a second mould platen. The first mould platen includes the cavity for production of the final finished part. A second movable piston portion is provided, which includes a cavity, which is adjustable by movement of the piston. The pressure in cavity is adjusted by way of the hydraulic smaller control piston, which is set forth for use in a control system, which hydraulically can compress or adjust the hold position of the moveable portion. A proportional valve may be utilized in the control system for controlling the adjustment of the pressure in the mould cavity. A pressure sensor is utilized to determine the pressure in the cavity, for purposes of the hold pressure in the subject process. After this, the proper pressure is determined and the mould cavity is held at this pressure by way of the control system linked to the proportional valve.

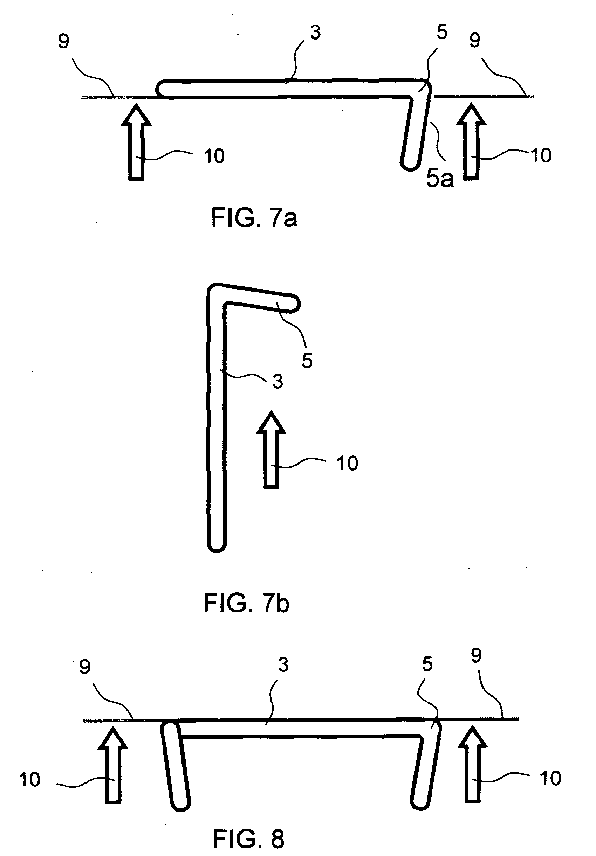

Referring to the examples of Fig. 7a and b and Fig. 8, there is shown a sample mirror in which various contours of the mirror can be presented as may be desired. This gives options which were hard to create using glass type mirrors or the like. The examples as shown in figure 7 b with one side piece 5 can be molded in one process and ejected with a piston contacting the side piece of the plastic glass. The design as shown in fig 7a has a adjacent rim which is molded together with the plastic glass element. The rim is used as a "loosed" part. During the deform process ejectors eject the article via these rims. Afterward the rims are cut off. With a solution like this the appearance of piston stamps on the transparent plastic glass is avoided.

A design as shown in fig 8 shows a drip mould which means that the molding form must include pistons and pins to remove the article form the cavity.

Preferably, the mould is then held at a pressure of generally from about 900 bar to about 1800 bar preferably from about 1000 to about 1800 bar and preferably from about 1000 to about 1200 bar.

It has been found that by using these steps, a glass-like transparency can be obtained. Utilizing these steps helps relieve internal tension in the material therefore removing barriers to optical clarity which otherwise might arise.

Mould temperatures vary depending on the material used. Typically, suitable temperatures are from about 80 to 120[deg.] C. A most preferred temperature of about 80[deg.] C. is utilized in the process.

Typical plastics used in the present invention include optical grade injection moldable material, optical grade polycarbonates, methacrylates or methacrylate modified polycarbonates. Suitable materials are obtainable from General Electric, for instance, plastics sold under the trade designations MAKROLON 2207 and LEXAN LSI are particularly suitable in processes of the present invention. Also, it is necessary to provide optical quality polished mould surfaces to maintain the optical properties of the finished part. The optical surface can be restricted to the plane part of the reflective element. The side piece 5 of the front plastic glass 3 can be designed to appear like frosted glass.

The surface 5a as shown in Fig. 7a is the surface through which illuminating light is emitted. The frosted glass effect achieved by a different structured surface in the molding tool emits a smooth light.

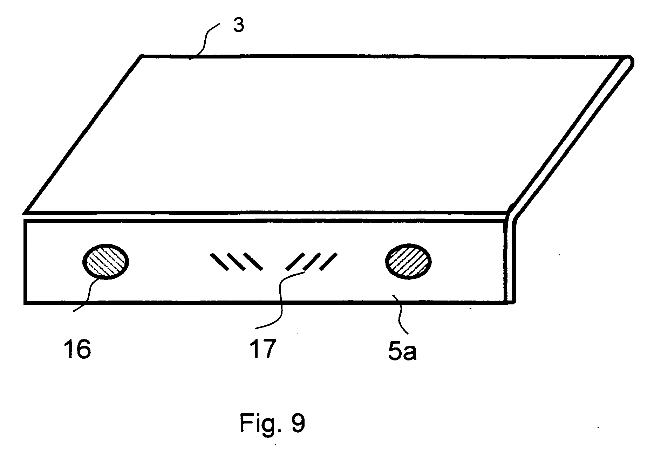

To provide read lamps the lenses of this read lamps A and B are also molded directly by structuring the tool. Therefore a Fresnel lens can be produced in the same molding step. Fig. 9 shows an embodiment of the front plastic glass seen from the bottom side of the mirror. The surface 5a of the front plastic glass 3 includes lenses 16 and a structure 17 out-coupling of light. The surface 5a is in this embodiment not fully transparent.

Subsequent heat treatments of the part which may occur due to protective or reflective coatings which may be applied do not detrimentally affect or degrade the mirrors of the present invention. This is due to the step of maintaining the part under the pressures specified at molding temperature. Generally, dwell times at temperature are from about 0.1 to 60 seconds. Typical dwell times at temperature are from about 10 to 50 seconds, with preferred dwell times being from about 18 to 25 seconds.

Because the plastic is allowed to harden at an elevated temperature and pressure, subsequent treatments requiring heat, such as adding reflective coatings, do not adversely affect the optical properties of the plastic.

### Legend

- 1: Mirror Housing
- 2: Mirror Base
- 3: Reflective Element
- 4: Light Module
- 5: Side Piece of Reflective Element
- 6: Reflective Coating
- 7: Pane View
- 8: Edge Illumination
- A, B: Read Light
- C: Ambient Light
- 9: Rim
- 10: Piston
- 11: Second Plastic Glass
- 12: Inter glass Space
- 13: Electrochromatic Material
- 14: Fixing and Isolating Mean
- 16: Lens
- 17: Surface Structure
- 18: LED

## Claims

1. Rear View Mirror comprising a mirror housing (1) mounted in interior of a vehicle and a mirror, which is formed by a coated front plastic glass (3), and a light module in the mirror housing (1) to illuminate defined areas adjacent to the rear view mirror **characterized in that** the front plastic glass (3) is formed in one piece with at least one side piece (5) forming a L-shape in cross section to be connected with the mirror housing having peripheral curved edges, whereby the front plastic glass (3) is coated with a reflective metal layer and whereby the side piece of front plastic glass (3) remains transparent and emits light if the light module (4) is activated.

2. Rear view mirror according claim 1 with the illumination means (4) are mounted in the mirror housing (1) behind the at least one transparent plastic glass side piece (5).

3. Rear view mirror according claim 1 wherein the reflective coating (6) is applied on the outside surface of the plastic glass, coating at least the visible surface in plan view.

4. Rear view mirror according claim 1 wherein the reflective coating (6) is applied on the inner surface of the plastic glass coating at least the visible surface in plan view.

5. Rear view mirror according claim 1 wherein the front plastic glass (3) has an optical surface visible as mirror.

6. Rear view mirror according cairn 1 wherein a lens (16) structure is molded in the at least one side piece (5) of the plastic glass.

7. Rear view mirror according claim 1 wherein the outer surface (5a) of the at least one side piece (5) is structured to be not fully transparent.

8. Rear view mirror according claim 1 wherein a lighting module is connected to the rear view mirror and at least one LED (18) activated to shine through the front plastic glass (3) at least in one area of the front plastic glass (3).

9. Rear view mirror according claim 1 wherein the light module comprises at least two LED (18) for a left and right read lamps.

10. Rear view mirror according claim 1 wherein the front plastic glass (3) forms an ambient light emitting surface (5a) in the areas not coated with reflective material (6) is designed to appear like frosted glass.

## Patentansprüche

1. Rückblickspiegel der ein Spiegelgehäuse (1) aufweist welches im Inneren eines Fahrzeugs untergebracht ist, und einen Spiegel der aus einem beschichteten vorderen Kunststoffglas (3) und einem Lichtmodul (4) in dem Spiegelgehäuse (1) aufgebaut ist um bestimmte an den Rückblickspiegel angrenzende Bereiche zu beleuchten, wobei das vordere Kunststoffglas (3) aus einem Stück mit mindestens einem Seitenteil (5) aufgebaut ist und einen L-förmigen Querschnitt aufweist, um mit dem Spiegelgehäuse verbunden zu werden welches am Aussenumfang gekrümmte Kanten aufweist, wobei das vordere Kunststoffglas mit einer reflektierenden Metallschicht beschichtet ist und das Seitenteil des vorderen Kunststoffglases durchsichtig bleibt und Licht abstrahlt, wenn das Lichtmodul aktiviert wird.

2. Rückblickspiegel nach Anspruch 1, wobei die Beleuchtungsvorrichtungen (4) in dem Speigelgehäuse (1) hinter dem mindestens einen durchsichtigen Kunststoffglas Seitenteil (5) befestigt sind.

3. Rückblickspiegel nach Anspruch 1, wobei die reflektierende Beschichtung (6) auf die Aussenfläche des Kunststoffglases aufgebracht ist und zumindest die in der Draufsicht sichtbare Fläche bedeckt.

4. Rückblickspiegel nach Anspruch 1, wobei die reflektierende Beschichtung (6) auf die Innenfläche des Kunststoffglases aufgebracht ist und zumindest die in der Draufsicht sichtbare Fläche bedeckt.

5. Rückblickspiegel nach Anspruch 1, wobei das vordere Kunststoffglas (3) eine optische Fläche aufweist, die als Spiegel sichtbar ist.

6. Rückblickspiegel nach Anspruch 1, wobei eine Linsenform (16) in das mindestens eine Seitenteil (5) des Kunststoffglases eingeformt ist.

7. Rückblickspiegel nach Anspruch 1, wobei die Aussenfläche (5a) des mindestens einen Seitenteils (5) so aufgebaut ist, dass sie nicht vollkommen durchsichtig ist.

8. Rückblickspiegel nach Anspruch 1, wobei ein Beleuchtungsmodul mit dem Rückblickspiegel verbunden ist und mindestens eine Leuchtdiode (18) aktiviert ist, so dass sie mindestens in einem Bereich des vorderen Kunststoffglases (3) durch das vordere Kunststoffglas (3) scheint.

9. Rückblickspiegel nach Anspruch (1), wobei das Lichtmodul mindestens zwei Leuchtdioden (18) für eine linke und eine rechte rote Lampe aufweist.

10. Rückblickspiegel nach Anspruch 1, wobei das vordere Kunststoffglas (3) eine Oberfläche (5a) aufweist, die Umgebungslicht in den Bereichen abstrahlt, die nicht mit dem reflektierenden Materials (6) beschichtet sind und welche so ausgebildet ist, dass sie wie mattiertes Glas erscheint.

## Revendications

1. Rétroviseur, comprenant un boîtier de miroir (1) fixé à l'intérieur d'un véhicule et formé de verre feuilleté (3) recouvrant la face avant, ainsi qu'un module d'éclairage inclus dans le boîtier (1) pour éclairer des zones définies attenantes au rétroviseur, **caractérisé en ce que** le verre feuilleté (3) est constitué d'une pièce avec au moins une pièce latérale (5) formant un angle droit en coupe transversale pour être connecté au boîtier du miroir dont les bords périphériques sont incurvés, le verre feuilleté étant recouvert d'une couche de métal réfléchissant et la pièce latérale du verre feuilleté (3) restant transparente et émettant de la lumière si le module d'éclairage est activé.

2. Rétroviseur selon la revendication 1, le dispositif d'éclairage (4) étant monté dans le boîtier du miroir (1) derrière au moins la pièce latérale (5) de verre feuilleté transparent.

3. Rétroviseur selon la revendication 1, dans lequel la couche réfléchissante (6) est appliquée sur la surface externe du verre feuilleté, recouvrant au moins la surface visible sur la vue en plan.

4. Rétroviseur selon la revendication 1, dans lequel la couche réfléchissante (6) est appliquée sur la surface interne du verre feuilleté, recouvrant au moins la surface visible sur la vue en plan.

5. Rétroviseur selon la revendication 1, dans lequel le verre feuilleté (3) a une surface optique visible en tant que miroir.

6. Rétroviseur selon la revendication 1, dans lequel une structure avec une lentille (16) est moulée au moins dans la pièce latérale (5) de verre feuilleté.

7. Rétroviseur selon la revendication 1, dans lequel la surface externe (5a) d'au moins la pièce latérale (5) est structurée de manière à ne pas être totalement transparente.

8. Rétroviseur selon la revendication 1, dans lequel un module d'éclairage est connecté au rétroviseur et au moins une LED (18) activée de manière à éclairer à travers le verre feuilleté (3) au moins une partie du verre feuilleté (3).

9. Rétroviseur selon la revendication 1, dans lequel le module d'éclairage comprend au moins deux LED (18) pour les ampoules de gauche et de droite.

10. Rétroviseur selon la revendication 1, dans lequel le verre feuilleté (3) forme une surface (5a) émettant une lumière ambiante dans les zones dépourvues de matière réfléchissante (6) et conçu de manière à ressembler à un miroir.
